# EUROPEAN PATENT SPECIFICATION

(11) **EP 4 589 303 B1**
(45) Date of publication and mention of the grant of the patent: **04.11.2026**
(21) Application number: 23867577.1
(22) Date of filing: 20.09.2023
(51) Int. Cl.: G01P 21/02, F04D 15/00, F04D 27/00, G01P 3/481

(54) **ADJUSTEMENT DEVICE AND ADJUSTMENT METHOD**
EINSTELLVORRICHTUNG UND EINSTELLVERFAHREN
APPAREIL DE RÉGLAGE ET PROCÉDÉ DE RÉGLAGE

(30) Priority: 20.09.2022 CN 202211145018
(43) Date of publication of application: 23.07.2025
(73) Proprietor: China Nuclear Power Operations Co., Ltd., Shenzhen, Guangdong 518000 (CN); China General Nuclear Power Corporation, Shenzhen, Guangdong 518026 (CN); CGN Power Co., Ltd., Shenzen, Guangdong 518026 (CN)
(72) Inventor: CHEN, Yongwei, Shenzhen, Guangdong 518000 (CN); ZHOU, Xinxing, Shenzhen, Guangdong 518000 (CN); ZHANG, Qifu, Shenzhen, Guangdong 518000 (CN); SUN, Zhimin, Shenzhen, Guangdong 518000 (CN); YE, Lan, Shenzhen, Guangdong 518000 (CN)
(74) Representative: Westphal, Mussgnug & Partner, Patentanwälte mbB
(86) International application number: PCT/CN2023/120182
(87) International publication number: WO 2024/061291

(56) References cited:
- EP-A2- 2 669 621
- CN-A- 113 701 584
- CN-A- 115 575 671
- CN-A- 115 598 369
- CN-U- 207 780 050
- CN-U- 209 674 889
- CN-U- 209 674 889
- CN-U- 216 285 351
- CN-U- 216 285 351
- CN-U- 216 991 775
- CN-U- 218 727 390
- JP-A- 2005 299 739
- US-A1- 2003 093 188

## Description

### FIELD

The invention relates to the field of nuclear power plant, in particular to an adjustment device and an adjustment method.

### BACKGROUND

The reactor coolant pump of the nuclear power plant is referred to as the main pump, functions to make the coolant form forced circulation, to transfer the heat energy generated in the reactor to the steam generator to generate steam to drive the steam turbine to do work. To ensure the regular operation of the main pump, it is necessary to monitor the operation state of the main pump, in which the main pump rotating speed sensing device can effectively monitor the running speed of the main pump.

The main pump rotating speed sensing device generally adopts the principle of magnetoresistive measurement and is designed for a U-shaped groove. It mainly includes two parts, a probe and a rotating speed sensor. The probe is fixed on the main pump spindle so that it can be rotated with the rotation of the main pump spindle. The rotating speed sensor is fixed on an external bracket, the rotating speed sensor is in a static state. When the main pump spindle rotates and drives the probe to cut the main pump rotating speed sensor, a pulse signal will be generated, and the measurement of the main pump speed can be realized by measuring this signal.

Because the main pump rotating speed sensing device needs to be disassembled and installed during each refueling, the probe after installation has a certain inclination, which will affect the accuracy and stability of speed measurement to a certain extent.

After the probe is positioned, it is necessary to adjust and position the rotating speed sensor, and adjust the relative position of the probe in the U-shaped groove of the rotating speed sensor. The relative position between the probe and the rotating speed sensor directly affects the accuracy of rotation speed measurement. Therefore, an adjustment method that can ensure the accuracy of adjustment is needed.

Reference is made to publications CN 209 674 889 U, CN 216 285 351 U, CN 207 780 050 U, and CN 216 991 775 U.

### SUMMARY

The technical problem to be solved by the invention is to provide an adjustment device and an adjustment method aiming at the positioning problem in the installation process of the rotating speed sensor in the prior art. The invention is set out in the appended set of claims.

The technical scheme adopted by the invention to solve the technical problem is as follows: an adjustment device is constructed for calibrating a rotating speed sensor of a main pump spindle, wherein the outer wall surface of the main pump spindle is provided with a probe, and the end of the rotating speed sensor opposite to the main pump spindle is provided with a sensing groove penetrating the rotating speed sensor along the circumferential direction, the sensing groove is used for the probe to rotate through, wherein the adjustment device comprises:

A mounting bracket is arranged on the main pump housing and used for mounting the rotating speed sensor;

A probe simulator comprises a positioning head for positioning the probe and a measurement assembly, wherein the positioning head rotates through the sensing groove, and the measurement assembly is used to obtain the distance from the positioning head to the axial inner side wall and the radial bottom wall of the sensing groove.

An adjustment method using the adjustment device of the main pump spindle rotating speed sensor. wherein comprising the following steps:

Rotating the probe simulator circularly around the axis of the main pump spindle until the probe simulator reach into the sensing groove of the rotating speed sensor;

Adjusting the position of the mounting bracket, and locking the mounting bracket when the positioning head of the probe simulator is in contact with the side face of the sensing groove opposite to the main pump spindle to obtain a top clearance *dₓ* of the sensing groove;

Obtaining the lower clearance h_{dy} of the sensing groove when the positioning head contacts the lower side face of the sensing groove;

Obtaining the upper clearance h_{uy} of the sensing groove when the positioning head contacts the upper side face of the sensing groove;

Confirming whether the upper clearance *h_{uy}* of the sensing groove and the lower clearance h_{dy} of the sensing groove meet the requirements, otherwise, adjust the up and down position of the rotating speed sensor until the upper clearance *h_{uy}* of the sensing groove and the lower clearance h_{dy} of the sensing groove meet the requirements, lock the mounting bracket.

The adjustment device and the adjusting method have the following beneficial effects: the position of the rotating speed sensor on the mounting bracket can be adjusted, and the position of the rotating speed sensor relative to the probe and the positioning member can be adjusted, so that the relative position between the rotating speed sensor and the probe is ensured to be accurate, and the normal rotation speed detection of the probe by the rotating speed sensor can be met.

### BRIEF DESCRIPTION OF THE DRAWINGS

The invention will be further described with reference to the attached drawings and examples, in which:
Fig. 1 is a schematic diagram of the assembly structure of a main pump spindle, a probe, a mounting assembly, a probe simulator, and a rotating speed sensor in an embodiment of the invention;
Fig. 2 is a schematic diagram of the three-dimensional structure of a main pump spindle, a probe, a mounting assembly, a probe simulator, and a rotating speed sensor in Fig. 1 when being assembled;
Fig. 3 is an exploded schematic diagram of a main pump spindle, a probe, a mounting assembly, a probe simulator, and a rotating speed sensor in Fig. 1;
Fig. 4 is an assembly schematic diagram of a base, an adjusting piece, and a pan-tilt of a probe simulator in Fig. 3;
Fig. 5 is a schematic diagram of the positions of the probe and the rotating speed sensor in Fig. 1;
Fig. 6 is a schematic diagram of the positions of the probe and the positioning member in Fig. 1;
Fig. 7 is a schematic diagram of the positions of the probe, the rotating speed sensor, and the positioning member in Fig. 1; and
Fig. 8 is a schematic diagram of the installation of the rotating speed sensor.

### DETAILED DESCRIPTION

To have a clearer understanding of the technical features, purposes, and effects of the present invention, specific embodiments of the present invention will now be described in detail with reference to the attached drawings.

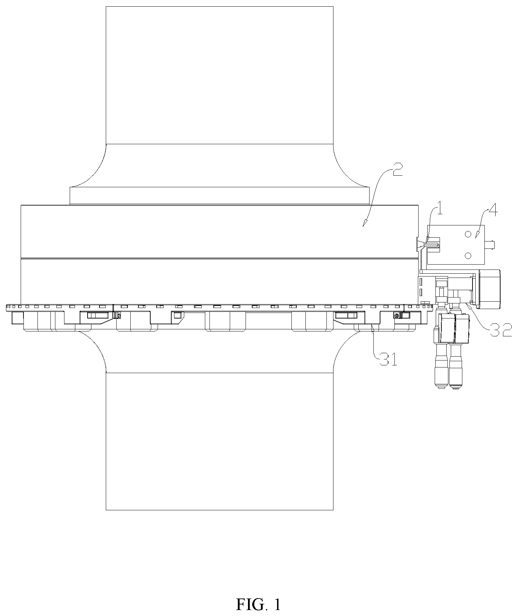

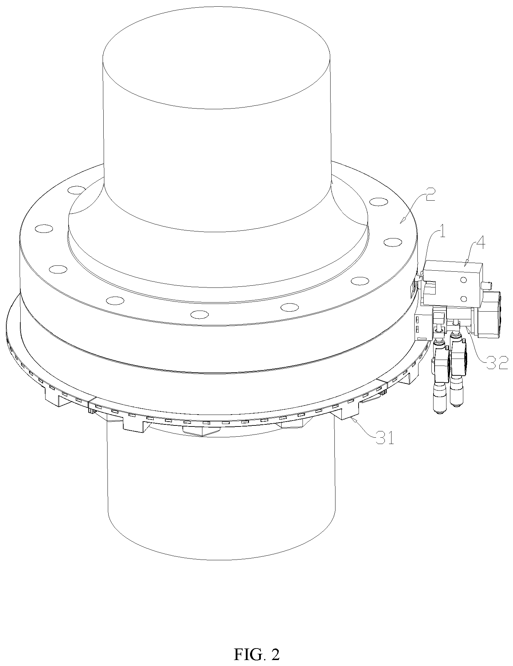

As shown in the following FIGS.1 to 3, a probe 1 is fixed on the main pump spindle 2 and can rotate with the main pump spindle 2. Preferably, the probe 1 is arranged on the outer wall surface of the main pump spindle 2.

In one embodiment of the application, a positioning device for positioning a probe of the main pump rotating speed sensing device is constructed, which includes a mounting assembly 31 and a probe simulator 32. The probe simulator 32 includes a positioning member 321, a base 322, and an adjusting piece 323, the positioning member 321 is provided with a positioning head B, the positioning member 321 is arranged on the base 322, and the adjusting piece 323 is used for driving the positioning member 321 to move along the axial and radial directions of the main pump spindle 2 on the base 322 so that the positioning member 321 can abut against the end and the side wall of the probe 1.

In this embodiment, in order to position the end, bottom surface, and top surface of the probe 1 conveniently, the positioning head B is L-shaped, including a first section and a second section which are bent in turn. The first section can abut against the end of the probe 1, and the second section can abut against the side wall of the probe 1. Generally, the two sides inside the included angle of the positioning head B can position the end and bottom surface of the probe 1, respectively, or the two sides inside the included angle of the positioning head B can position the end and top surface of the probe 1, respectively.

The L-shaped positioning head B has regular shape and easy size control, which can improve the positioning accuracy of the probe 1. In other embodiments, the shape of the positioning head B of the positioning member 321 can also be formed in other ways. A first positioning area B1 and a second positioning area B2 can be formed on the positioning head B. The first positioning area B1 positions the end of the probe 1, and the second positioning area B2 positions the bottom surface or the top surface of the probe 1. The first positioning area B1 and the second positioning area B2 may be flat, curved or pointed structure. Of course, the shape of the positioning head B can also be U-shaped, and the three surfaces in the U-shaped opening can respectively position the end, bottom surface and top surface of the probe 1.

The positioning member 321 is made of stainless steel material 316 with a machining accuracy of 5um. The stainless steel material 316 is anti-corrosion, high-strength anti-collision; minimal quantity design of parts eliminates the assembly error inside theassembly unit; the miniaturization, high precision, and high reliability design are realized.

When the probe simulator 32 moves along the axial direction and radial direction of the main pump spindle 2, the positioning head B positions the end of the probe 1 and the bottom surface of the probe 1, respectively. Of course, the positioning head B can also position the end of the probe 1 and the top surface of the probe 1, respectively, or the positioning head B can position the end of the probe 1 and the top surface and bottom surface of the probe 1, respectively. By using the positioning head B, the relative position of the probe 1 and the main pump spindle 2 can be determined after the relative position of the probe 1 and the positioning member 321 is positioned under the cold stop working condition. The structure is simple, the positioning mode is simple and fast, and the positioning efficiency is improved.

In some embodiments, the mounting assembly 31 is arranged around the periphery of the main pump spindle 2 for positioning with the end surface and the outer periphery of the main pump spindle 2, forming a positioning reference fixed in relative position with respect to the main pump spindle 2, and providing a positioning reference for the installation of the probe simulator 32. The probe simulator 32 is slidably mounted on the mounting assembly 31. The probe simulator 32 can rotate circularly around the axis of the main pump spindle 2 along the mounting assembly 31, to rotate relative to the probe 1 on the main pump spindle 2. When the probe simulator 32 is rotated to the position of the probe 1, the probe simulator 32 can be used as a reference to position the probe 1.

In some embodiments, the mounting assembly 31 includes an annular enclosure 311 and mounting feet 312. Further, the size of the inner ring of the annular enclosure 311 is equivalent to the size of the outer ring of the main pump spindle 2, so as to be positioned with the outer wall surface of the main pump spindle 2. The annular enclosure 311 can be used as a reference for the outer wall surface. In addition, there are a plurality of mounting feet 312 distributed along the circumferential direction of the annular enclosure 311 and connected with the annular enclosure 311, so as to be positioned with the end surface of the main pump spindle 2, and the mounting feet 312 are used as the positioning reference of the end surface of the main pump spindle 2.

The mounting assembly 31 is positioned simultaneously with the outer wall surface and end surface of the lower end of the main pump spindle 2, which can provide multi-directional reference for the positioning of the probe simulator 32 and make the positioning more accurate. In other embodiments, the mounting assembly 31 can also be positioned simultaneously with the outer wall surface and the end surface of the upper end of the main pump spindle 2.

In this embodiment, both the annular enclosure 311 and the mounting feet 312 are positioned on the main pump spindle 2 by magnetic adsorption. Of course, in other embodiments, only the annular enclosure 311 can be positioned by magnetic adsorption, or only the mounting feet 312 can be positioned by magnetic adsorption, to ensure the stable and reliable positioning of the mounting assembly 31. In this embodiment, both the annular enclosure 311 and the mounting feet 312 are provided with mounting grooves A for magnets to be mounted, and a plurality of mounting grooves A are distributed at intervals along the circumference on the outer wall surface of the annular enclosure 311 for magnets to be laterally clamped.

Preferably, the mounting feet 312 extend along the radial direction of the annular enclosure 311, so that the mounting feet 312 are more uniform distributed and the force is more stable. Further, in this embodiment, the annular enclosure 311 includes four segments of arc-shaped enclosure table 3111 distributed along the circumferential direction, and each enclosure table 3111 is spliced into a circular ring along the circumferential direction, and each enclosure table 3111 is provided with two mounting feet 312. Understandably, in other embodiments, the annular enclosure 311 may also include two or more segments of other numbers of arc-shaped enclosure table 3111 distributed along the circumferential direction, and each arc-shaped enclosure table 3111 is spliced into an annular shape along the circumferential direction, and the number of mounting feet 3112 on each enclosure table 3111 may also be one or more.

Further, the mounting feet 312 can be integrated with the annular enclosure 311, and when the annular enclosure 311 is arranged in sections, the mounting feet 312 can also be integrated with the arc-shaped enclosure table 3111. Preferably, each petal of arc-shaped enclosure table 3111 is a single part, and the arc-shaped enclosure table 3111 is magnetically attracted to the side surface of the main pump spindle 2, and the mounting feet 312 integrally designed with the arc-shaped enclosure table 3111 are magnetically attracted to the bottom surface of the main pump spindle 2. The arc-shaped enclosure table 3111 is made of stainless steel 316 with a machining accuracy of 5um, which is anti-corrosion, and high-strength anti-collision, minimal quantity design of parts eliminates the assembly error inside the assembly unit; the miniaturization, high precision, and high reliability design are realized.

Preferably, in order to ensure the installation accuracy of the mounting assembly 31, the mounting assembly 31 is made of stainless steel 316, machined and manufactured in one piece and made of the same material, to avoid large deformation during placing or moving.

Preferably, to ensure the accurate trajectory of the probe simulator 32, a guide structure for sliding mounting of the probe simulator 32 is provided on the mounting assembly 31 for the probe simulator 32 to rotate circularly along the mounting assembly 31 around the axis of the main pump spindle 2. Generally, the probe simulator 32 slides with the guiding structure to make the rotation of the probe simulator 32 smoother, so that the changes in the axial height and radial displacement of the probe simulator 32 can be ensured to be within a controllable range without apparent changes during the movement.

Further, the guiding structure is detachably mounted on the mounting assembly 31, which is convenient for assembly. In this embodiment, the guiding structure is magnetically attached to the mounting assembly 31, which improves the stability of the attachment. Preferably, the guiding structure is an annular guide rail arranged on the annular enclosure 311 along the circumference of the main pump spindle 2. In some embodiments, the guiding structure can be detachably installed on the annular enclosure 311. Of course, the guiding structure can also be directly formed on the annular enclosure 311, such as a guiding groove.

Referring to FIGS. 1 to 4, the application also constructs a simulation rotating device for simulating a rotation of a probe of the main pump rotating speed sensing device, which is used to simulate the probe 1 rotation on the main pump spindle 2. Further, the simulation rotating device includes a mounting assembly 31 and a probe simulator 32, and the mounting assembly 31 is arranged around the periphery of the main pump spindle 2. The probe simulator 32 includes a positioning member 321, a base 322 and an adjusting piece 323, the positioning member 321 is installed on the adjusting piece 323, and the adjusting piece 323 is movably installed on the base 322 for driving the positioning member 321 to move along the radial and axial directions of the main pump spindle 2 to position with the probe 1.

The base 322 is slidably mounted on the mounting assembly 31 for driving the positioning member 321 to slide along the mounting assembly 31. Because the probe simulator 32 can rotate circularly around the main pump spindle 2 along the mounting assembly 31, relative rotation occurs between the probe 1 and the simulation rotating device to simulate the rotation of the probe 1.

The probe simulator 32 of the simulation rotating device rotates relative to the probe 1 on the main pump spindle 2, and generates relative rotation relative to the probe 1, so that the rotation of the probe 1 can be simulated, and whether the positioning of the probe 1 is accurate can be judged by using the relative position between the two during rotation. This process can be carried out when the main pump spindle 2 is stopped, and the efficiency is improved.

Preferably, the adjusting piece 323 is positioned on the base 322 by magnetic adsorption, and further, the adjusting piece 323 can be embedded on the base 322, and using the combination of embedding and adsorption, so that the positioning is accurate and the stability is good. Understandably, it can also be positioned by magnetic adsorption or embedding alone.

When positioning by using magnetic adsorption, the magnets can be distributed to make the magnetic attraction more uniform and balanced. Further, using magnetic adsorption, it has the following effects:
1. The contact surfaces of two parts that are magnetically attracted to each other are complete and smooth, which can eliminate the interference to the magnetic attraction effect and the moving effect;
2. Uniform distribution of magnetic attraction force, adjustable magnetic attraction force, reliable adsorption, convenient installation and disassembly, and movement of the probe simulator 32;
3. On the premise of miniaturization and strength guarantee, the weight of parts can be reduced, which is beneficial to lightweight design.

The base 322 of the probe simulator 32 is also made of stainless steel 316 with a machining accuracy of 5um; the lower end surface of the base 322 and the annular enclosure 311 are also installed by the manner of magnetic attraction. The mating surface of the base 322 with the main pump spindle 2 adopts a fitting design with the circumferential surface of the main pump spindle 2, and the side of the base 322 is designed with an embedded, distributed, and programmable sheet magnet bin C corresponding to the circumferential surface of the main pump spindle 2, and a soft iron belt bin magnetically attracted by the annular enclosure 311. Considering that the installed probe simulator 32 should be easy to move smoothly along the circumference of the main pump spindle 2, in addition, the annular enclosure 311 is designed with an embedded sheet magnet, so the corresponding part of the base 322 which has magnetic attraction requirements with the annular enclosure 311 can no longer use magnets, but use soft iron belts.

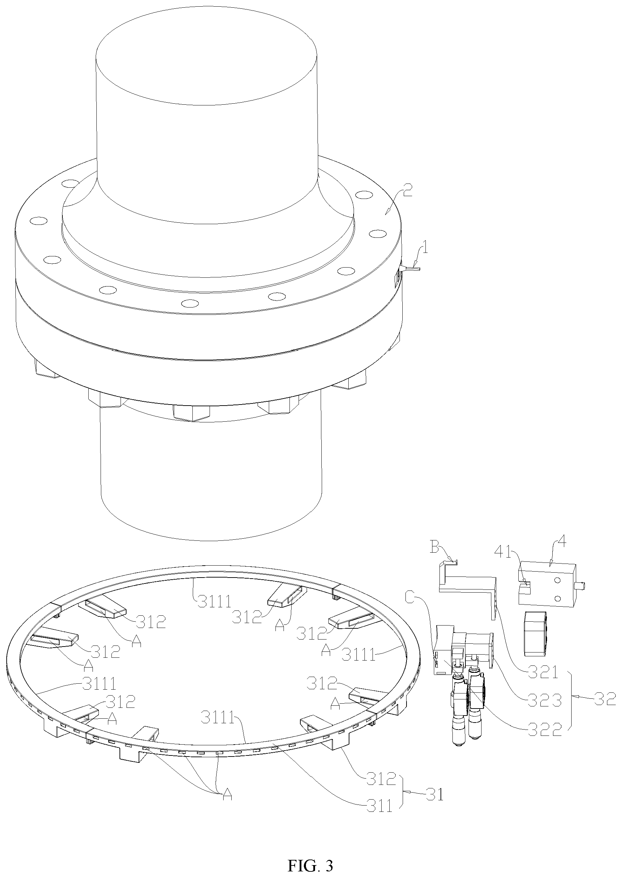

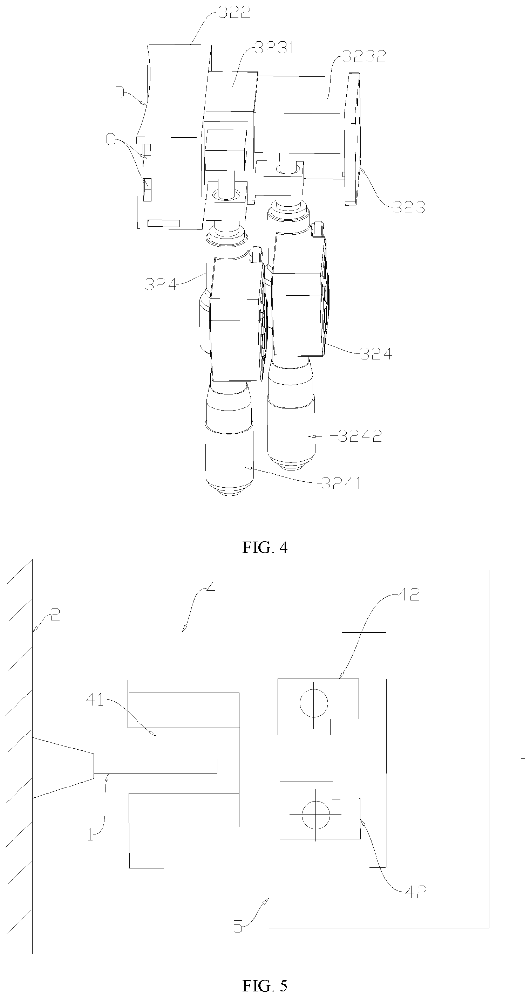

In some embodiments, referring to FIGS. 3 and 4, the adjusting piece 323 includes a first movable seat 3231 and a second movable seat 3232, the first movable seat 3231 and the base 322 can move along the axial direction of the main pump spindle 2 from each other, and the second movable seat 3232 and the first movable seat 3231 can move along the radial direction of the main pump spindle 2 from each other, and the positioning member 321 is installed on the second movable seat 3232.

Further, the base 322 is provided with a first guiding structure for guiding the first movable seat 3231, so that the first movable seat 3231 and the base 322 can move relatively, and the first movable seat 3231 is provided with a second guiding structure for guiding the second movable seat 3232, so that the second movable seat 3232 and the first movable seat 3231 can move relatively. When adjusting the first movable seat 3231 and the second movable seat 3232, the position of the positioning member 321 can be adjusted, which is convenient to adjust the position of the positioning member 321 to position the probe 1.

Preferably, the first guiding structure is guided along the axial direction of the main pump spindle 2, and the second guiding structure is guided along the radial direction of the main pump spindle 2, one is guided along the axial direction of the main pump spindle 2, and the other is guided along the radial direction of the main pump spindle 2, so that the position adjustment of the positioning member 321 in different directions can be realized, making the adjustment more accurate and flexible. For example, the first guiding structure includes a guide rail arranged between the base 322 and the first movable seat 3231, which extends along the axial direction of the main pump spindle 2, so that the first movable seat 3231 can reciprocate relative to the base 322 in the axial direction of the main pump spindle 2, thereby driving the positioning member 321 to reciprocate along the axial direction of the main pump spindle 2. The second guiding structure includes a guide rail arranged between the first movable seat 3231 and the second movable seat 3232, and the guide rail extends along the radial direction of the main pump spindle 2, so that the second movable seat 3232 reciprocates along the radial direction of the main pump spindle 2 relative to the first movable seat 3231, thereby driving the positioning member 321 to reciprocate along the radial direction of the main pump spindle 2. In other embodiments, the guiding directions of the first guiding structure and the second guiding structure may also form an included angle, which is convenient for adjusting the position of the positioning member 321 in different directions.

Of course, in other embodiments, the first guiding structure is a guide groove, or it can be a combination of a guide groove and a guide rail, so long as it can provide stable guidance. Further, the second guiding structure is a guide groove or a combination of a guide groove and a guide rail, so as to provide stable guidance.

The probe simulator 32 also includes a measurement assembly 324, which further includes a first adjusting member 3241 for driving the first movable seat 3231 to move and a second adjusting member 3242 for driving the second movable seat 3232 to move, to drive the positioning head B to move when driving the first movable seat 3231 and the second movable seat 3232 to move. The first adjusting member 3241 is rotatably arranged on the base 322 and rotatably cooperates with the first movable seat 3231, and the second adjusting member 3242 is rotatably arranged on the first movable seat 3231 and rotatably cooperates with the second movable seat 3232.

The measurement assembly 324 of the probe simulator 32 can be a miniaturized precision pan-tilt, usually the model is LE40-L, which can be used to detect the movable displacement of the base 322 and the adjusting piece 323. The range of motion of the pan-tilt is 10 mm. In this embodiment, the first adjusting member 3241 and the second adjusting member 3242 can be knobs on two pan-tilt platforms, respectively. By turning the knobs, the position adjustment movement of the positioning member 321 on the adjusting piece 323 can be realized. The digital micrometer DMH-1 is used to replace the original spiral micrometer of the pan-tilt of the measurement assembly 324, and to communicate with the display through the converter DMH-DL-U. The digital micrometer with digital interface is used to realize centralized digital display of the measured values of the multi-dimensional clearance, so that the first adjusting member 3241 and the second adjusting member 3242 can also measure the moving displacement of the positioning member 321 during the adjustment process.

As shown in Fig. 4, further, in order to facilitate the positioning of the simulation rotating device and improve the positioning accuracy, a positioning surface D matched with the outer wall surface of the main pump spindle 2 is provided on the base 322, and the reference is stable by utilizing the surface positioning of the main pump spindle 2, and deviation is not easy to occur.

Preferably, the positioning surface D on the base 322 is an arc surface, which is matched with the outer wall surface of the main pump spindle 2, and positioning is realized by virtue of the positioning surface D sticking to the outer wall surface of the main pump spindle 2. In other embodiments, the positioning surface D on the base 322 can also be provided with a plurality of positioning protrusions, and each positioning protrusion can be attached to the surface of the main pump spindle 2 respectively to realize the positioning of the base 322.

Further, the mounting assembly 31 is positioned with the end surface and the outer ring of the main pump spindle 2, and the base 322 is magnetically attracted to the mounting assembly 31, and the base 322 is positioned by the mounting assembly 31, so that the positioning is more stable and reliable.

After the probe simulator 32 completes the positioning of the probe 1, the rotation speed of the probe 1 can be detected by the rotating speed sensor 4. Usually, the rotating speed sensor 4 adopts the principle of magnetoresistive measurement, and the rotating speed sensor 4 is provided with a sensing groove 41. In this embodiment, the sensing groove 41 is U-shaped. When measuring the rotational speed of the probe 1, the sensing groove 41 of the rotating speed sensor 4 is located at the end opposite to the main pump spindle 2, and the sensing groove 41 penetrates the rotating speed sensor 4 along the circumferential direction of the main pump spindle 2. Preferably, the width of the sensing groove 41 is greater than the thickness of the probe 1 for simultaneous passage of the probe 1, and the positioning head B positioned against the probe 1 after it snaps into place during rotation.

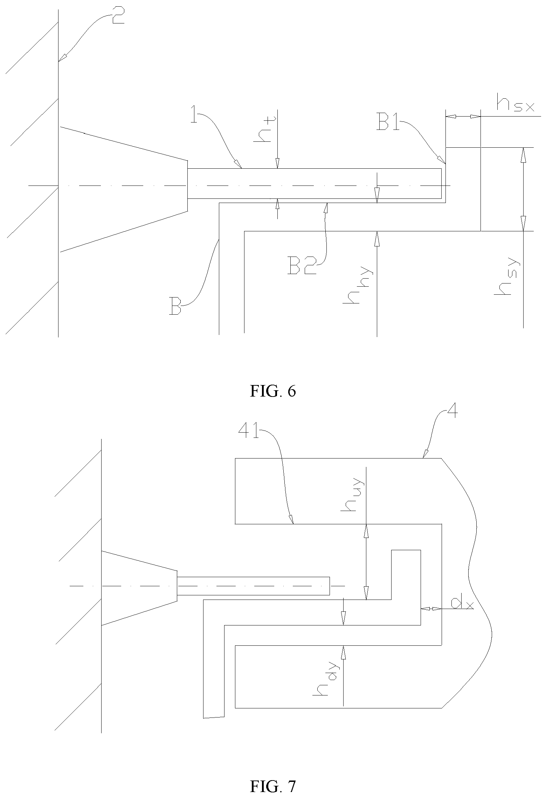

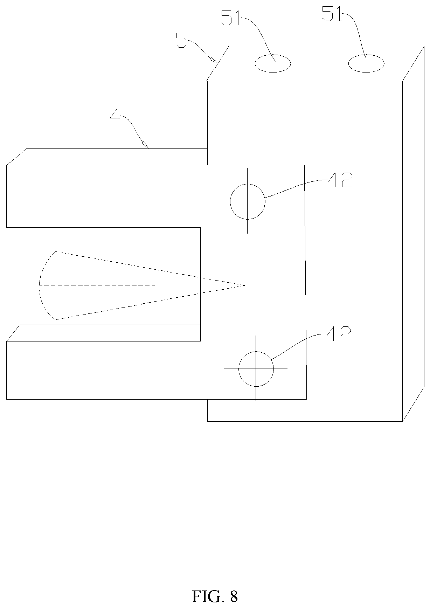

With reference to FIGS. 5 to 8, the application also discloses an adjustment device for the main pump rotating speed sensor, which is used for calibrating a rotating speed sensor 4 of the main pump spindle 2. The outer wall surface of the main pump spindle 2 is provided with a probe 1, and the end of the rotating speed sensor 4 opposite to the main pump spindle 2 is provided with a sensing groove 41 penetrating the rotating speed sensor 4 along the circumferential direction, and the sensing groove 41 is used for the probe 1 to rotate through.

The adjustment device includes a mounting bracket 5 and a probe simulator 32, the mounting bracket 5 is arranged on the main pump housing and used for mounting the rotating speed sensor 4, so that the rotating speed sensor 4 can detect the rotation speed of the probe 1 along with the main pump spindle 2. The probe simulator 32 includes a positioning head B for positioning the probe 1 and a measurement assembly 324. The positioning head B rotates through the sensing groove 41, and the measurement assembly 324 is used to obtain the distance from the positioning head B to the axial inner side wall and radial bottom wall of the sensing groove 41.

The rotating speed sensor 4 is fixed on the mounting bracket 5 and is in a static state. When the main pump spindle 2 rotates to drive the probe 1 to cut the rotating speed sensor 4, to generates a pulse signal. Therefore, when the main pump runs normally, the rotating speed sensor 4 will generate a specific frequency signal, and the measurement of the rotation speed of the main pump can be realized through this signal measurement. Preferably, the mounting bracket 5 is installed on the pump body, and the mounting bracket 5 can be mounted more stably by using the pump body for support. Further, the position of the mounting bracket 5 on the pump body can be adjusted, to adjust the position of the rotating speed sensor 4 relative to the probe 1 when adjusting the position of the mounting bracket 5.

The probe 1 and the positioning head B rotate through the sensing groove 41, and the positioning head B is moved by adjusting the first adjusting member 3241 and the second adjusting member 3242 of the measurement assembly 324. While moving, the measurement assembly 324 can measure the moving displacement of the positioning head B to obtain the relative position before and after moving, and the measurement assembly 324 obtains the distance from the positioning head B to the axial inner side wall and radial bottom wall of the sensing groove 41.

Preferably, the position of the rotating speed sensor 4 on the mounting bracket 5 can be adjusted, and the position of the rotating speed sensor 4 relative to the probe 1 and the positioning member 321 can be adjusted to ensure the accuracy of the relative position between the rotating speed sensor 4 and the probe 1, to satisfy the rotating speed sensor 4 to carry out normal rotating speed detection on the probe 1.

In some embodiments, the rotating speed sensor 4 is provided with first mounting holes 42, a first locking piece is locked to the mounting bracket 5 after the first locking piece passes through the first mounting holes 42. The first locking piece is in clearance fit with the first mounting hole 42 that allows the rotating speed sensor 4 relative to the first locking piece to adjust its position laterally, so that the rotating speed sensor 4 can meet the relative position requirements with the probe 1.

Further, in this embodiment, the axial direction of the first mounting hole 42 is the same as the penetrating direction of the sensing groove 41. Due to the clearance fit between the first mounting hole 42 and the first locking piece, the rotating speed sensor can be offset relative to different sides of the first locking piece, so that the position of the rotating speed sensor 4 can be adjusted in the horizontal and vertical directions relative to the probe 1, and at the same time, the swinging direction of the rotating speed sensor 4 can be adjusted.

Preferably, the mounting bracket 5 is provided with second mounting hole 51, a second locking piece is locked to the pump body after the second locking piece passes through the second mounting hole 51; the second locking piece is in clearance fit with the second mounting hole 51 that allows the rotating speed sensor 4 relative to the second locking piece to adjust its position laterally, so that the rotating speed sensor 4 can meet the relative position requirements with the probe 1.

Further, to realize multidirectional adjustment, the axial directions of the first mounting hole 42 form an included angle with the axial direction of the second mounting hole 51, and the axial directions of the second mounting hole 51 are the same as the axial direction of the main pump spindle 2, so that the position of the rotating speed sensor 4 relative to the probe 1 in the horizontal direction can be adjusted, and at the same time, the swinging direction of the rotating speed sensor 4 can be adjusted. Generally, due to the relative position between the probe 1 and the rotating speed sensor 4 directly affects the accuracy and stability of measurement, there are strict requirements for the installation of the probe 1 and the rotating speed sensor 4.

When the main pump spindle 2 is rotated, the probe 1 is placed in the middle of the sensing groove 41 of the rotating speed sensor 4, and its clearance needs to be measured, the measurement clearance includes an upper clearance of the sensing groove 41, a lower clearance of the sensing groove 41, and a topclearance between the probe 1 and the sensing groove 41, to judge whether the installation standard requirements are met.

Further, another embodiment of the application also discloses an installation method for the spindle rotating speed sensor, which includes the following steps:
Rotating the probe simulator 32 circularly around the axis of the main pump spindle 2 until the probe simulator 32 reach into the sensing groove 41 of the rotating speed sensor 4;
Adjusting the position of the mounting bracket 5, and locking the mounting bracket 5 when the positioning head B of the probe simulator 32 is in contact with the side face of the sensing groove 41 opposite to the main pump spindle 2 to obtain a top clearance *dₓ* of the sensing groove;
Obtaining the lower clearance h_{dy} of the sensing groove when the positioning head B contacts the lower side face of the sensing groove 41;
Obtaining the upper clearance h_{uy} of the sensing groove when the positioning head B contacts the upper side face of the sensing groove 41;
Confirming whether the upper clearance *h_{uy}* of the sensing groove and the lower clearance h_{dy} of the sensing groove meet the requirements, otherwise, adjust the up and down position of the rotating speed sensor 4 until the upper clearance *h_{uy}* of the sensing groove and the lower clearance h_{dy} of the sensing groove meet the requirements, lock the mounting bracket 5.

Further, upper clearance of the sensing groove satisfies the formula: *h_{uy}* = Δ*h_{uy}* + *h_{sy}* - *h_{hy}*, where the Δ*h_{uy}* is the upper moving amount of the sensing groove, and the *h_{sy}* is the height of the vertical edge of the positioning head B, the *h_{hy}* is the height of the transverse edge of the positioning head B;
The requirement of the upper clearance of the sensing groove meets the range: *h_{ub}* ± *hᵤⱼ*, where the *h_{ub}* is the installation standard value of the upper clearance of the sensing groove, the *hᵤⱼ* is the installation accuracy value of the upper clearance of the sensing groove;
In the adjustment process, if the upper clearance of the sensing groove meets: *h_{ub}* - *hᵤⱼ* ≤ *h_{uy}* ≤ *h_{ub}* + *hᵤⱼ,* the installation of the rotating speed sensor meets the installation requirements.

Further, the lower clearance of the sensing groove satisfies the formula: *h_{dy}* = Δ*h_{dy}*+*h_{hy},* where the *h_{dy}* is the lower clearance of the sensing groove, the *h_{hy}* is the height of the transverse edge of the positioning head B, and the Δ*h_{dy}* is the lower moving amount of the sensing groove;
The required range of the lower clearance of the sensing groove is: *h_{db}* ± *h_{dj}*, where the *h_{db}* is the installation standard value of the lower clearance of the sensing groove, the *h_{dj}* is the installation accuracy value of the lower clearance of the sensing groove;
In the adjustment process, if *h_{db}* - *h_{dj}* ≤ *h_{dy}* ≤ *h_{db}* + *h_{dj}* , it meets the installation requirements.

Further, the thickness of the vertical edge of the positioning head B, *hₛₓ = d_{b},* where the *hₛₓ* is the thickness of the vertical edge of the positioning head B, the *d_{b}* is the installation standard value of the top clearance of the sensing groove;
Adjust the second locking piece, and lock the second locking piece when the top plane of the U-shaped sensing groove is in contact with the vertical plane of the positioning head B, to ensure the top clearance of the sensing groove: *dₓ* = *d_{b},* and realize the required range of the top clearance of the sensing groove: *d_{b}* ± *dⱼ,* where the *dⱼ* is the installation accuracy value of the top clearance of the sensing groove, it meets the installation requirements;
In the process of adjustment, if the height of the transverse edge of the positioning head B: *h_{hy}* = *h_{db}* - 0.8 * *h_{dj},* where the *h_{db}* is the installation standard value of the lower clearance of the sensing groove, the *h_{dj}* is the installation accuracy value of the lower clearance of the sensing groove,
This height design ensures that the positioning member 321 can normally enter the sensing groove 41 of the sensor, and at the same time, it ensures that there is a qualified margin: 0.2 * *h_{dj}*, it meets the installation requirements;
If the height of the vertical edge of the positioning head B: *h_{sy}* ≥ *hₜ*, and the thickness of the probe 1 is: *hₜ* = 4 ± 0.1mm, it meets the installation requirements;
The *h_{hy}* is the height of the transverse edge of the positioning head B, and the *h_{sy}* is the height of the vertical edge of the positioning head B, the *h_{db}* is the installation standard value of the lower clearance of the sensing groove, the *h_{dj}* is the installation accuracy value of the lower clearance of the sensing groove.

The rotating speed sensor 4 is mounted on the mounting bracket 5 through a first locking piece, and the mounting bracket 5 is mounted on the main pump body through a second locking piece. The forward and backward movement of that rotating speed sensor 4 can be adjust by the second locking piece; the rotating speed sensor 4 can be adjusted to move forward and backward, move up and down and rotate at a certain angle through the first locking piece.

When installing, first position the second locking piece, and the second locking piece adjusts the top clearance *dₓ* of the sensing groove. If the upper clearance *h_{uy}* of the sensing groove, the lower clearance *h_{dy}* of the sensing groove, and the top clearance *dₓ* of the sensing groove all meet the requirements of the installation standard after the positioning of the second locking piece, it is unnecessary to adjust the first locking piece; if it does not meet the requirements of the installation standard, it is necessary to adjust the first locking piece.

The clearance measurement between the rotating speed sensor 4 and the probe 1 is measured and confirmed in the jacking oil pump start-up state of the 2.5Mpa platform.

The shape and size of the measuring piece used for measurement is the same as the shape and size of the positioning head B of the positioning member 321, and the measuring piece is a high-precision machined piece. The specific sizes of the measuring piece are as follows:
The height of the transverse edge of the measuring piece is: *h_{hy}* = *h_{db}* - *h_{dj}*, where the *h_{db}* is the installation standard value of the lower clearance of the sensing groove, the *h_{dj}* is the installation accuracy value of the lower clearance of the sensing groove.

The height of the vertical edge of the measuring piece is: *h_{sy}* ≥ *hₜ*, and the thickness of the probe 1 is:ht = 4 ± 0.1mm;
The thickness of the vertical edge of the measuring piece is: *hₛₓ* = *d_{b}* - *dⱼ,* where the *d_{b}* is the installation standard value of the top clearance of the sensing groove, the *dⱼ* is the installation accuracy value of the top clearance of the sensing groove.

Specifically, the method includes the following measurement steps:
Rotate the main pump spindle 2 to rotate the probe 1 to the sensing groove 41 of the rotating speed sensor 4;
Move the measuring piece around the main pump spindle 2 along the guiding structure of the annular enclosure 311, and move the measuring piece to the rotating speed sensor 4;
Using a high-precision two-dimensional moving device, the top of the probe 1 is contacted with the inner plane of the vertical edge of the measuring piece, and the lower plane of the probe 1 is contacted with the upper plane of the transverse edge of the measuring piece to obtain the reference positioning of the measuring piece;
When the top plane of the U-shape sensing groove contacts the out plane of the vertical edge of the measuring piece, the top clearance of the sensing groove is obtained;
Using a high-precision two-dimensional moving device, the lower plane of the transverse edge of the measuring piece is contacted with the lower plane of the sensing groove 41 to obtain the lower clearance of the sensing groove;
Using a high-precision two-dimensional moving device, the upper plane of the vertical edge of the measuring piece is contacted with the upper plane of the sensing groove 41, the upper clearance of the sensing groove is obtained.

The measuring piece is installed on a high-precision two-dimensional moving device, which realizes the movement of the x shaft and y shaft of the two-dimensional direction, and measures the moving amount with high precision at the same time.

Referring to the adjustment of the rotating speed sensor 4, similarly, the upper clearance of the sensing groove: *h_{uy}* = Δ*h_{uy}* + *h_{sy}* - *h_{hy},* where the Δ*h_{uy}* is the upper moving amount of the sensing groove, and the *h_{sy}* is the height of the vertical edge of the positioning head B, the *h_{hy}* is the height of the transverse edge of the positioning head B;
The required range of the upper clearance of the sensing groove is: *h_{ub}* ± *hᵤⱼ*, where the *h_{ub}* is the installation standard value of the upper clearance of the sensing groove, *hᵤⱼ* is the installation accuracy value of the upper clearance of the sensing groove;
If h_{ub}-hᵤⱼ ≤ h_{uy} ≤ h_{ub} + hᵤⱼ, it meets the installation requirements and displays green on the display screen, otherwise it displays red.

The lower clearance of the sensing groove is: *h_{dy}* = Δ*h_{dy}* + *h_{hy}*, where the *h_{dy}* is the lower clearance of the sensing groove, the *h_{hy}* is the height of the transverse edge of the positioning head B, the Δ*h_{dy}* is the lower moving amount of the sensing groove;
The required range of the lower clearance of the sensing groove is: *h_{db}* ± *h_{dj}*, where the *h_{db}* is the installation standard value of the lower clearance of the sensing groove, the *h_{dj}* is the installation accuracy value of the lower clearance of the sensing groove;
If h_{db}-h_{dj} ≤ h_{dy} ≤ h_{db} + h_{dj}, it meets the installation requirements and displays green on the display screen, otherwise it displays red.

The top clearance of the sensing groove is: *dₓ* = *hₛₓ* + *Δdₓ*;
The required range of the top clearance of the sensing groove is: *d_{b}* ± *dⱼ*, where the *hₛₓ* is the thickness of the vertical edge of the positioning head B, the *d_{b}* is the installation standard value of the top clearance of the sensing groove, the *dⱼ* is the installation accuracy value of the top clearance of the sensing groove;
If d_{b}-dⱼ ≤ dₓ ≤ d_{b} + dⱼ, it meets the installation requirements and displays green on the display screen, otherwise it displays red.

Where Δ*h_{uy}* is the upper moving amount of the sensing groove, Δ*h_{dy}* is the lower moving amount of the sensing groove, the forward amount of the top clearance of the sensing groove is Δ*dₓ*.

It has the following innovations:
① The adjustment device has the characteristics of miniaturization, light weight, anti-collision, anti-corrosion, simple field operation, minimal number of parts, high precision and high reliability.
② There is no mechanical interference between the adjustment device and the displacement sensor, and there is no mechanical interference between the adjustment device and the probe 1 and the rotating speed sensor 4.
③ Under the cold stop working condition, the probe 1 is at any position on the main pump spindle 2, the adjustment device only needs a simple installation, it can quickly realizes the rotation simulation of the main pump spindle 2, the real-time and high-precision synchronous measurements of the probe 1 and the top clearance, the upper clearance and the lower clearance of the sensing groove, and can be presented in the form of a digital display, if the data is qualified, use the green mark; if the data is unqualified, use the red mark, to realize adjustment installation of the rotating speed sensor 4.
④ Enclosure table 3111 adopts 4 petals integrated design, each petal of the enclosure table 3111 is a single part; the probe simulator 32 adopts a single part design scheme; the design with minimal number of parts eliminates the internal assembly error of assembly unit, the miniaturization, high precision, and high reliability design are realized; material of stainless steel 316, anti-collision, and anti-corrosion.
⑤ No tools are needed when the adjustment device is installed and disassembled on site; the enclosure table 3111, with a total of four petals and an integrated design, and the side surface of the main pump spindle 2 are magnetically attracted; and the mounting feet 312, arranged on the enclosure table 3111 with an integrated design and the bottom surface of the main pump spindle 2 are magnetically attracted; the pedestal of the measurement assembly 324 with two degrees of freedom (axial and radial) and the main pump spindle 2are magnetically attracted; the pedestal of the measurement assembly 324 with two degrees of freedom (axial and radial) and the enclosure table 3111 are magnetically attracted. Magnetic attraction adopts a design scheme of embedded, distributed, and programmable of magnets.
⑥ During the research and development of the adjustment apparatus, the spindle simulation debugging bench is made of the same material as the main pump spindle 2. By adjusting the magnet magnetic design and the number and distribution of the sheet magnets, so that the magnetic attraction force between the enclosure table 3111 and the side of the main pump spindle 2 is appropriate; and the magnetic attraction force between the mounting feet 312 arranged on the enclosure table 3111 with integrated design and the bottom of the main pump spindle 2 is appropriate. The magnetic attraction distribution is uniform, the assembly and disassembly are convenient and the adsorption is reliable. The mutually attractive contact surface has no openings and grooves, and is complete and smooth.

The installation and adjustment window of main pump rotating speed sensing device of nuclear power units at multiple bases is the platform with primary circuit pressure of 2.5Mpa, this work is on the refueling overhaul main line path, which directly affects the refueling overhaul period and power generation of the unit. If it is optimized and adjusted to the cold state window, that is, the primary circuit pressure is 0Mpa, it can save about 3 hours of main line time for refueling and overhaul, effectively improve the power generation of nuclear power units, and have remarkable economic and social benefits.

By studying the device and method for adjusting the main pump rotating speed sensor under the cold stop working condition, the main pump rotating speed sensing device can be adjusted under the cold stop working condition, and the production process can be optimized and improved, which can create great production value. At the same time, the existing adjustment methods for main pump rotating speed sensor are universal in nuclear power units at multiple bases, and the research results have significant reference and reference significance, and have extensive promotion and use value. It can be understood that the above technical features can be used in any combination without limitation.

The above is only the embodiment of the present invention, which does not limit the patent scope of the present invention. Any equivalent structure or equivalent process transformation made by using the contents of the specification and drawings of the present invention, or directly or indirectly applied to other related technical fields, are equally included in the patent protection scope of the present invention. The invention is defined by the appended claims.

## Claims

1. An adjustment device for calibrating a rotating speed sensor (4) of a main pump spindle (2), wherein the adjustment device comprises:
a mounting bracket (5) configured to be arranged on a main pump housing and for mounting the rotating speed sensor (4); and
a probe simulator (32) comprising a positioning head (B) configured for positioning a probe (1) arranged on an outer wall surface of the main pump spindle (2), and a measurement assembly (324), wherein the positioning head (B) is configured to rotate through a sensing groove (41) of the rotating speed sensor (4), wherein the measurement assembly (324) is configured to obtain a distance from the positioning head (B) to an axial inner side wall and a radial bottom wall of the sensing groove (41);
wherein the measurement assembly (324) comprises a first adjusting member for driving the positioning head (B) to move axially with respect to the sensing groove (41) and measuring the moving displacement, and a second adjusting member for driving the positioning head (B) to move radially with respect to the sensing groove (41) and measuring the moving displacement.

2. The adjustment device according to claim 1, wherein the adjustment device further comprises a first locking piece, the first locking piece is configured to be locked to the mounting bracket (5) after the first locking piece passes through at least one first mounting hole (42) of the rotating speed sensor (4), and the first locking piece is configured to be in clearance fit with the first mounting hole (42).

3. The adjustment device according to claim 2, wherein the adjustment device further comprises a second locking piece, the mounting bracket (5) is provided with at least one second mounting hole (51), wherein the second locking piece is configured to be locked to a pump body after the second locking piece passes through a second mounting hole (51); and the second locking piece is configured to be in clearance fit with the second mounting hole (51).

4. The adjustment device according to claim 3, wherein the axial direction of the first mounting hole (42) forms an included angle with the axial direction of the second mounting hole (51), and the axial directions of the second mounting hole (51) is configured to be same as the axial direction of the main pump spindle (2).

5. An adjustment method using the adjustment device according to any one of the claims 1-4, wherein comprising the following steps:
rotating the probe simulator (32) circularly around the axis of the main pump spindle (2) until the probe simulator (32) reach into the sensing groove (41) of the rotating speed sensor (4);
adjusting the position of the mounting bracket (5), and locking the mounting bracket (5) when the positioning head (B) of the probe simulator (32) is in contact with the side face of the sensing groove (41) opposite to the main pump spindle (2) to obtain a top clearance *dₓ* of the sensing groove;
obtaining the lower clearance h_{dy} of the sensing groove when the positioning head (B) contacts the lower side face of the sensing groove (41);
obtaining the upper clearance h_{uy} of the sensing groove when the positioning head (B) contacts the upper side of the sensing groove (41);
confirming whether the upper clearance *h_{uy}* of the sensing groove and the lower clearance h_{dy} of the sensing groove meet the requirements, otherwise, adjust the up and down position of the rotating speed sensor (4) until the upper clearance *h_{uy}* of the sensing groove and the lower clearance h_{dy} of the sensing groove meet the requirements, lock the mounting bracket (5).

6. The adjustment method of the adjustment device according to claim 5, wherein,
the upper clearance of the sensing groove: *h_{uy}* = Δ*h_{uy}* + *h_{sy}* - *h_{hy}*;
the requirement range of the upper clearance of the sensing groove is: *h_{ub}* ± *hᵤⱼ*;
if *h_{ub}* - *hᵤⱼ* ≤ *h_{uy}* ≤ *h_{ub}* + *hᵤⱼ,* it meets the installation requirements;
the *h_{sy}* is the height of the vertical edge of the positioning head (B), the *h_{hy}* is the height of the transverse edge of the positioning head (B), the Δ*h_{uy}* is the upper moving amount of the sensing groove, the *h_{ub}* is the installation standard value of the upper clearance of the sensing groove, the *hᵤⱼ* is the installation accuracy value of the upper clearance of the sensing groove.

7. The adjustment method of the adjustment device according to claim 6, wherein,
the lower clearance of the sensing groove: *h_{dy}* = Δ*h_{dy}* + *h_{hy};*
the required range of the lower clearance of the sensing groove is: *h_{db}* ± *h_{dj}*;
if *h_{db}* - *h_{dj}* ≤ *h_{dy}* ≤ *h_{db}* + *h_{dj}*, it meets the installation requirements;
the *h_{dy}* is the lower clearance of the sensing groove, the *h_{hy}* is the height of the transverse edge of the positioning head (B), and the Δ*h_{dy}* is the lower moving amount of the sensing groove , the *h_{db}* is the installation standard value of the lower clearance of the sensing groove, the *h_{dj}* is the installation accuracy value of the lower clearance of the sensing groove,

8. The adjustment method of the adjustment device according to claim 6, wherein,
the thickness of the vertical edge of the positioning head (B) is *hₛₓ = d_{b}*,
if the top clearance of the sensing groove: *dₓ = d_{b},* and realize the required range of the top clearance of the sensing groove: *d_{b}* ± *dⱼ,* it meets the installation requirements;
if the height of the transverse edge of the positioning head (B): *h_{hy}* = *h_{db}* - 0.8 * *h_{dj}*, it meets the installation requirements;
if the height of the vertical edge of the positioning head (B): *h_{sy}* ≥ *hₜ*, and the thickness of the probe 1 is: *hₜ* = 4 ± 0.1mm, it meets the installation requirements;
the vertical edge thickness of the positioning head (B) is *the hₛₓ* , the *d_{b}* is the installation standard value of the top clearance of the sensing groove, *dⱼ* is the installation accuracy value of the top clearance of the sensing groove;
the height of the transverse edge of the positioning head (B) is: *h_{hy}*, and the height of the vertical edge of the positioning head (B) is *h_{sy}*, the *h_{db}* is the installation standard value of the lower clearance of the sensing groove, the *h_{dj}* is the installation accuracy value of the lower clearance of the sensing groove.

## Patentansprüche

1. Einstellvorrichtung zum Kalibrieren eines Drehzahlsensors (4) einer Hauptpumpenspindel (2), wobei die Einstellvorrichtung Folgendes umfasst:
eine Aufnahmehalterung (5), die dazu ausgelegt ist, an einem Hauptpumpengehäuse angeordnet zu sein, und den Drehzahlsensor (4) aufzunehmen; und
einen Sondensimulator (32), umfassend einen Positionierkopf (B), der dazu ausgelegt ist, eine an einer Außenwandfläche der Hauptpumpenspindel (2) angeordnete Sonde (1) zu positionieren, und eine Messbaugruppe (324), wobei der Positionierkopf (B) dazu ausgelegt ist, durch eine Erfassungsnut (41) des Drehzahlsensors (4) zu drehen, wobei die Messbaugruppe (324) dazu ausgelegt ist, einen Abstand von dem Positionierkopf (B) zu einer axialen Innenseitenwand sowie einer radialen Bodenwand der Erfassungsnut (41) zu erhalten;
wobei die Messbaugruppe (324) ein erstes Einstellelement zum Antreiben des Positionierkopfes (B) zum axialen Bewegen in Bezug auf die Erfassungsnut (41) und Messen der Bewegungsverschiebung sowie ein zweites Einstellelement zum Antreiben des Positionierkopfes (B) zum radialen Bewegen in Bezug auf die Erfassungsnut (41) und Messen der Bewegungsverschiebung umfasst.

2. Einstellvorrichtung nach Anspruch 1, wobei die Einstellvorrichtung ferner ein erstes Verriegelungsstück umfasst, wobei das erste Verriegelungsstück dazu ausgelegt ist, an der Aufnahmehalterung (5) verriegelt zu werden, nachdem das erste Verriegelungsstück durch mindestens ein erstes Aufnahmeloch (42) des Drehzahlsensors (4) passiert ist, und das erste Verriegelungsstück dazu ausgelegt ist, in Spielpassung mit dem ersten Aufnahmeloch (42) zu sein.

3. Einstellvorrichtung nach Anspruch 2, wobei die Einstellvorrichtung ferner ein zweites Verriegelungsstück umfasst, die Aufnahmehalterung (5) mit mindestens einem zweiten Aufnahmeloch (51) bereitgestellt ist, wobei das zweite Verriegelungsstück dazu ausgelegt ist, an einem Pumpenkörper verriegelt zu werden, nachdem das zweite Verriegelungsstück durch ein zweites Aufnahmeloch (51) passiert ist; und das zweite Verriegelungsstück dazu ausgelegt ist, in Spielpassung mit dem zweiten Aufnahmeloch (51) zu sein.

4. Einstellvorrichtung nach Anspruch 3, wobei die axiale Richtung des ersten Aufnahmelochs (42) einen eingeschlossenen Winkel mit der axialen Richtung des zweiten Aufnahmelochs (51) ausbildet und die axiale Richtung des zweiten Aufnahmelochs (51) dazu ausgelegt ist, gleich der axialen Richtung der Hauptpumpenspindel (2) zu sein.

5. Einstellverfahren unter Verwendung der Einstellvorrichtung nach einem der Ansprüche 1 bis 4, wobei es die folgenden Schritte umfasst:
Drehen des Sondensimulators (32) kreisförmig um die Achse der Hauptpumpenspindel (2), bis der Sondensimulator (32) in die Erfassungsnut (41) des Drehzahlsensors (4) reicht;
Einstellen der Position der Aufnahmehalterung (5) und Verriegeln der Aufnahmehalterung (5), wenn der Positionierkopf (B) des Sondensimulators (32) die der Hauptpumpenspindel (2) gegenüberliegenden Seitenfläche der Erfassungsnut (41) berührt, um ein oberstes Spiel *dₓ* der Erfassungsnut zu erhalten;
Erhalten des unteren Spiels h_{dy} der Erfassungsnut, wenn der Positionierkopf (B) die untere Seitenfläche der Erfassungsnut (41) berührt;
Erhalten des oberen Spiels h_{uy} der Erfassungsnut, wenn der Positionierkopf (B) die obere Seite der Erfassungsnut (41) berührt;
Bestätigen, ob das obere Spiel *h_{uy}* der Erfassungsnut und das untere Spiel h_{dy} der Erfassungsnut die Anforderungen erfüllen, andernfalls Einstellen der oberen und unteren Position des Drehzahlsensors (4), bis das obere Spiel *h_{uy}* der Erfassungsnut und das untere Spiel h_{dy} der Erfassungsnut die Anforderungen erfüllen, Verriegeln die Aufnahmehalterung (5).

6. Einstellverfahren der Einstellvorrichtung nach Anspruch 5, wobei
das obere Spiel der Sensornut: *h_{uy}* = Δ*h_{uy}* + *h_{sy}* - *h_{hy}*;
der Anforderungsbereich des oberen Spiels der Sensornut: *h_{ub}* ± *hᵤⱼ* beträgt;
wenn *h_{ub}* - *hᵤⱼ* ≤ *h_{uy}* ≤ *h_{ub}* + *hᵤⱼ*, die Installationsanforderungen erfüllt sind;
*h_{sy}* die Höhe der vertikalen Kante des Positionierkopfes (B) ist, *h_{hy}* die Höhe der Querkante des Positionierkopfes (B) ist, Δ*h_{uy}* der obere Bewegungsbetrag der Erfassungsnut ist, *h_{ub}* der Installationsstandardwert des oberen Spiels der Erfassungsnut ist, *hᵤⱼ* der Installationsgenauigkeitswert des oberen Spiels der Erfassungsnut ist.

7. Einstellverfahren der Einstellvorrichtung nach Anspruch 6, wobei
das untere Spiel der Sensornut: *h_{dy}* = Δ*h_{dy}* + *h_{hy}*;
der erforderliche Bereich des unteren Spiels der Sensornut: *h_{db}* ± *h_{dj}* beträgt;
wenn *h_{db}* - *h_{dj}* ≤ *h_{dy}* ≤ *h_{db}* + *h_{dj}*, die Installationsanforderungen erfüllt sind;
*h_{dy}* das unter Spiel der Erfassungsnut ist, *h_{hy}* die Höhe der Querkante des Positionierkopfes (B) ist und Δ*h_{dy}* der untere Bewegungsbetrag der Erfassungsnut ist, *h_{db}* der Installationsstandardwert des unteren Spiels der Erfassungsnut ist, *h_{dj}* der Installationsgenauigkeitswert des unteren Spiels der Erfassungsnut ist.

8. Einstellverfahren der Einstellvorrichtung nach Anspruch 6, wobei
die Dicke der vertikalen Kante des Positionierkopfes (B) *hₛₓ* = *d_{b}* beträgt,
wenn das oberste Spiel der Erfassungsnut: *dₓ* = *d_{b}* und der erforderliche Bereich des obersten Spiels der Erfassungsnut: *d_{b}* ± *dⱼ* umgesetzt ist, die Installationsanforderungen erfüllt sind;
wenn die Höhe der Querkante des Positionierkopfes (B): *h_{hy}* = *h_{db}* - 0,8 * *h_{dj}*, die Installationsanforderungen erfüllt sind;
wenn die Höhe der vertikalen Kante des Positionierkopfes (B): *h_{sy}* ≥ *hₜ* und die Dicke der Sonde 1: *hₜ* = 4 ± 0,1 mm beträgt, die Installationsanforderungen erfüllt sind;
die Dicke der vertikalen Kante des Positionierkopfes (B) *hₛₓ* ist, *d_{b}* der Installationsstandardwert des obersten Spiels der Erfassungsnut ist, *dⱼ* der Installationsgenauigkeitswert des obersten Spiels der Erfassungsnut ist;
die Höhe der Querkante des Positionierkopfes (B): *h_{hy}* ist und die Höhe der vertikalen Kante des Positionierkopfes (B) *h_{sy}* ist, *h_{db}* der Installationsstandardwert des unteren Spiels der Erfassungsnut ist, *h_{dj}* der Installationsgenauigkeitswert des unteren Spiels der Erfassungsnut ist.

## Revendications

1. Dispositif de réglage pour l'étalonnage d'un capteur de vitesse de rotation (4) d'une broche de pompe principale (2), dans lequel le dispositif de réglage comprend :
un support de montage (5) configuré pour être agencé sur un carter de pompe principal et pour le montage du capteur de vitesse de rotation (4) ; et
un simulateur de sonde (32) comprenant une tête de positionnement (B) configurée pour positionner une sonde (1) agencée sur une surface de paroi externe de la broche de pompe principale (2), et un ensemble de mesure (324), dans lequel la tête de positionnement (B) est configurée pour entrer en rotation à travers une rainure de détection (41) du capteur de vitesse de rotation (4), dans lequel l'ensemble de mesure (324) est configuré pour obtenir une distance entre la tête de positionnement (B) et une paroi latérale interne axiale et une paroi inférieure radiale de la rainure de détection (41) ;
dans lequel l'ensemble de mesure (324) comprend un premier élément de réglage pour entraîner la tête de positionnement (B) à se déplacer axialement par rapport à la rainure de détection (41) et mesurer le déplacement mobile, et un second élément de réglage pour entraîner la tête de positionnement (B) à se déplacer radialement par rapport à la rainure de détection (41) et mesurer le déplacement mobile.

2. Dispositif de réglage selon la revendication 1, dans lequel le dispositif de réglage comprend en outre une première pièce de verrouillage, la première pièce de verrouillage est configurée pour être verrouillée au support de montage (5) après que la première pièce de verrouillage passe à travers au moins un premier trou de montage (42) du capteur de vitesse de rotation (4), et la première pièce de verrouillage est configurée pour être en ajustement libre avec le premier trou de montage (42).

3. Dispositif de réglage selon la revendication 2, dans lequel le dispositif de réglage comprend en outre une seconde pièce de verrouillage, le support de montage (5) est muni d'au moins un second trou de montage (51), dans lequel la seconde pièce de verrouillage est configurée pour être verrouillée sur un corps de pompe après que la seconde pièce de verrouillage passe à travers un second trou de montage (51) ; et la seconde pièce de verrouillage est configurée pour être en ajustement libre avec le second trou de montage (51).

4. Dispositif de réglage selon la revendication 3, dans lequel la direction axiale du premier trou de montage (42) forme un angle inclus avec la direction axiale du second trou de montage (51), et les directions axiales du second trou de montage (51) sont configurées pour être identiques à la direction axiale de la broche principale de pompe (2).

5. Procédé de réglage utilisant le dispositif de réglage selon l'une quelconque des revendications 1 à 4, comprenant les étapes suivantes :
rotation du simulateur de sonde (32) de manière circulaire autour de l'axe de la broche de pompe principale (2) jusqu'à ce que le simulateur de sonde (32) atteigne la rainure de détection (41) du capteur de vitesse de rotation (4) ;
ajustement de la position du support de montage (5) et verrouillage du support de montage (5) lorsque la tête de positionnement (B) du simulateur de sonde (32) est en contact avec la face latérale de la rainure de détection (41) opposée à la broche de pompe principale (2) pour obtenir un dégagement supérieur *dₓ* de la rainure de détection ;
obtention du dégagement inférieur h_{dy} de la rainure de détection lorsque la tête de positionnement (B) entre en contact avec la face latérale inférieure de la rainure de détection (41) ;
obtention du dégagement supérieur h_{uy} de la rainure de détection lorsque la tête de positionnement (B) entre en contact avec le côté supérieur de la rainure de détection (41) ;
confirmation de si le dégagement supérieur *h_{uy}* de la rainure de détection et le dégagement inférieur h_{dy} de la rainure de détection répondent aux exigences, sinon, ajustement de la position haute et basse du capteur de vitesse de rotation (4) jusqu'à ce que le dégagement supérieur *h_{uy}* de la rainure de détection et le dégagement inférieur h_{dy} de la rainure de détection répondent aux exigences, verrouillage du support de montage (5).

6. Procédé de réglage du dispositif de réglage selon la revendication 5, dans lequel,
le dégagement supérieur de la rainure de détection :*h_{uy}* = Δ*h_{uy}* + *h_{sy}* - *h_{hy}* ;
la plage requise du dégagement supérieur de la rainure de détection est : *h_{ub}* ± *hᵤⱼ* ;
si *h_{ub}* - *hᵤⱼ* ≤ *h_{uy}* ≤ *h_{ub}* + *hᵤⱼ*, cela répond aux exigences d'installation ;
*h_{sy}* est la hauteur du bord vertical de la tête de positionnement (B), *h_{hy}* est la hauteur du bord transversal de la tête de positionnement (B), Δ*h_{uy}* est la quantité de déplacement supérieur de la rainure de détection, *h_{ub}* est la valeur standard d'installation du dégagement supérieur de la rainure de détection, *hᵤⱼ* est la valeur de précision d'installation du dégagement supérieur de la rainure de détection.

7. Procédé de réglage du dispositif de réglage selon la revendication 6, dans lequel,
le dégagement inférieur de la rainure de détection : *h_{dy}* = Δ*h_{dy}* + *h_{hy}* ;
la plage requise du dégagement inférieur de la rainure de détection est : *h_{db}* ± *h_{dj}* ;
si *h_{db}* - *h_{dj}* ≤ *h_{dy}* ≤ *h_{db}* + *h_{dj}*, cela répond aux exigences d'installation ;
*h_{dy}* est le dégagement inférieur de la rainure de détection, *h_{hy}* est la hauteur du bord transversal de la tête de positionnement (B), et Δ*h_{dy}* est le déplacement inférieur de la rainure de détection, *h_{db}* est la valeur standard d'installation du dégagement inférieur de la rainure de détection, *h_{dj}* est la valeur de précision d'installation du dégagement inférieur de la rainure de détection.

8. Procédé de réglage du dispositif de réglage selon la revendication 6, dans lequel,
l'épaisseur du bord vertical de la tête de positionnement (B) est *hₛₓ* = *d_{b}*,
si le dégagement supérieur de la rainure de détection : *dₓ* = *d_{b}*, et réalise la plage requise du dégagement supérieur de la rainure de détection : *d_{b}* ± *dⱼ*, cela répond aux exigences d'installation ;
si la hauteur du bord transversal de la tête de positionnement (B) : *h_{hy}* = *h_{db}* - 0,8 * *h_{dj}*, cela répond aux exigences d'installation ;
si la hauteur du bord vertical de la tête de positionnement (B) : *h_{sy}* ≥ *hₜ*, et l'épaisseur de la sonde 1 est : *hₜ* = 4 ± 0,1 mm, cela répond aux exigences d'installation ;
l'épaisseur de bord vertical de la tête de positionnement (B) est *hₛₓ*, *d_{b}* est la valeur standard d'installation du dégagement supérieur de la rainure de détection, *dⱼ* est la valeur de précision d'installation du dégagement supérieur de la rainure de détection ;
la hauteur du bord transversal de la tête de positionnement (B) est : *h_{hy}*, et la hauteur du bord vertical de la tête de positionnement (B) est *h_{sy}*, *h_{db}* est la valeur standard d'installation du dégagement inférieur de la rainure de détection, *h_{dj}* est la valeur de précision d'installation du dégagement inférieur de la rainure de détection.
